# EUROPÄISCHE PATENTSCHRIFT

(11) **EP 0 646 340 B1**
(45) Veröffentlichungstag und Bekanntmachung des Hinweises auf die Patenterteilung: **06.03.1996**
(21) Anmeldenummer: 94115507.9
(22) Anmeldetag: 30.09.1994
(51) Int. Cl.: A45F 3/04, A45F 4/02, B60N 2/28

(54) **Ranzen**
Satchel
Cartable

(30) Priorität: 30.09.1993 DE 9314768 U
(43) Veröffentlichungstag der Anmeldung: 05.04.1995
(73) Patentinhaber: Seidel, Hans Jürgen, D-47497 Rheinberg (DE)
(72) Erfinder: Seidel, Hans Jürgen, D-47497 Rheinberg (DE)
(74) Vertreter: Funken, Josef, Dipl.-Ing.

(56) Entgegenhaltungen:
- EP-A- 0 088 378
- DE-U- 9 307 533
- DE-U- 9 307 602
- DE-U- 9 309 696
- DE-U- 9 310 251
- DE-U- 9 310 719
- FR-A- 2 646 594
- GB-A- 2 023 412

## Beschreibung

Die Erfindung betrifft einen Ranzen für Schulkinder mit zwei Gurten an der dem Rücken zugewandten Fläche des Ranzens und mit einem Tragegriff am oberen Ende des Ranzens.

Kinder bis zur Vollendung ihres zwölften Lebensjahres, die kleiner als 150 cm sind, müssen durch amtlich genehmigte und für das Kind geeignete Rückhalteeinrichtungen in Personenkraftwagen auf deren Vordersitzen sowie Rücksitzen gesichtert sein. Als Rückhalteeinrichtungen sind Kindersitze bekannt, die mit Gurten an den Sitzen und Rückenlehnen von Personenkraftwagen zu befestigen sind, in denen die Kinder sitzen bzw. liegen und mittels weiterer Gurte gegen Herausrutschen aus der Rückhalteeinrichtung gesichert sind.

Die gängigen Kindersitze sind für Kinder mit einem Körpergewicht von 22 bis 36 kg meistens zu klein. Für diese Gruppe von Kindern sind Sitzerhöhungen in Form von Sitzkissen bekannt, wodurch die Gurtgeometrie der im Personenkraftwagen vorhandenen Gurte so verändert wird, daß der Gurt nicht mehr über den Hals, sondern über die Brust läuft. Hierdurch ist ebenfalls sichergestellt, daß Kinder dieser Gruppe nicht unter den Gurt wegrutschen können.

Aus der DE-AS 25 43 456 ist ein Rucksack aus kastenförmigen Bauelementen aus steifem Material mit einem Hauptteil und einem Deckel bekannt. Bei diesem Rucksack ist die dem Rücken des Trägers zugewandte Fläche konkav ausgebildet. Außerdem sind auch die seitlichen senkrechten Flächen konkav gewölbt. Darüberhinaus ist ein oben offenes, kastenförmiges Zwischenteil vorgesehen, das auf den Hauptteil aufsetzbar und durch den Deckel verschließbar ist. Die konkave Form von wenigstens drei Flächen gestattet es, den Rucksack als bequemes Sitzgerät zu verwenden.

In der DE-U 93 07 602 ist ein tragbarer Behälter, insbesondere Schulranzen beschrieben, bei dem eine seiner Außenflächen so gestaltet ist, daß er die Funktion eines PKW-Kindersitzes übernehmen kann. Dabei können Teile der Sitzfläche abnehmbar bzw. klappbar sein und Stauraum bieten. Außerdem können Sitzgurtführungen als Bestandteil des Ranzens angebracht sein. Dieser tragbare Behälter erfüllt die doppelte Aufgabe eines Schulranzens und eines PKW-Kindersitzes.

Dieser bekannte Behälter weist die Merkmale des Oberbegriffes von Anspruch 1 auf und besteht aus einem einteiligen oben offenen Behälterteil, der an seinem oberen Ende über ein Verbindungselement einen Deckel aufweist, mit dem der Behälterteil geschlossen und geöffnet werden kann.

Der Erfindung liegt die Aufgabe zugrunde, einen Ranzen der einleitend genannten Art so auszubilden, daß der Ranzen als solcher und zusätzlich auch als Sitzkissen in einem Personenkraftwagen verwendbar ist.

Diese Aufgabe wird erfindungsgemäß dadurch gelöst, daß der Ranzen eine Ranzenschale und eine Sitzschale aufweist, die aus druck- und bruchstabilem sowie leichtem Kunststoff bestehen und mit hautfreundlichem und weichem Kunststoff beschichtet sind sowie an ihren Standfläche schwenkbeweglich miteinander verbunden sind, daß die Ranzenschale dem Rücken des Schulkindes entsprechend gewölbt sowie die Sitzschale dem Gesäß des Schulkindes entsprechend gemuldet ist und daß die beiden Seitenwände der Ranzenschale hoch gezogen sind, so daß sie bei geschlossenem Ranzen die entsprechenden Seitenwände der Sitzschale überlappen.

Auf diese Weise gelangt man zu einem Ranzen, der sowohl als Ranzen als auch als Sitzkissen dient, der mit der Ranzenschale zuunterst auf die Autositzbank gelegt werden kann, wobei sich das Schulkind auf die nach oben orientierte Sitzschale des Ranzens setzt. Dadurch ist es möglich, daß das Schulkind die im Personenkraftwagen vorgesehenen Gurte anlegen kann, weil durch den erhöhten Sitz die Gurtgeometrie so verändert ist, daß das Kind nicht mehr unter dem Gurt wegrutschen kann.

Außerdem steht das gesamte innere Volumen des Ranzens als Stauraum zur Verfügung. Im übrigen sind die ansonsten notwendigen Kissen nicht erforderlich.

In weiterer Ausgestaltung der Erfindung empfiehlt es sich, daß die Standflächen der Sitzschale und die Ranzenschale mittels einer gemeinsamen Drehachse schwenkbeweglich miteinander verbunden sind.

Zweckmäßig kann der Ranzen so ausgebildet sein, daß an der dem Rücken zugewandten Fläche der Ranzenschale zwei Tragegurte vorgesehen sind, die jeweils an beiden Enden in Befestigungsmulden an der Ranzenschale befestigt sind und daß am oberen Ende der Ranzenschale ein Tragegriff angebracht ist, der in einer Mulde an der Ranzenschale befestigt ist.

Zur Erhöhung der Sicherheit im Straßenverkehr sind zweckmäßigerweise an den freien Flächen des Ranzens Reflektorstreifen vorgesehen.

Die Erfindung wird nachfolgend anhand eines in der Zeichnung dargestellten Ausführungsbeispieles des näheren erläutert.

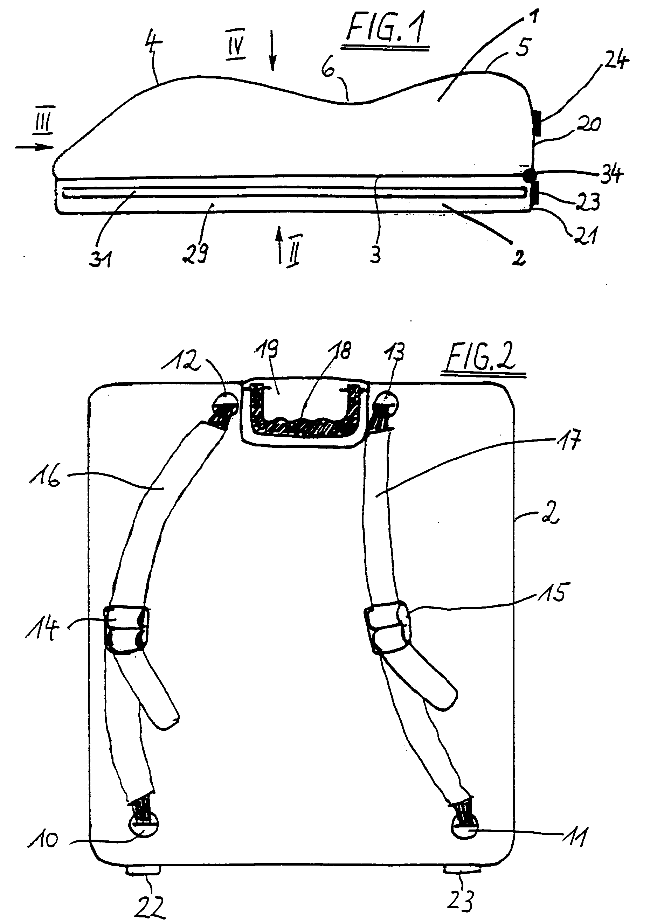

Es zeigt
- Fig. 1: eine Seitenansicht auf einen erfindungsgemäß ausgebildeten Ranzen,
- Fig. 2: eine Ansicht von unten auf die Ranzenschale in Richtung des Pfeiles II der Figur 1,

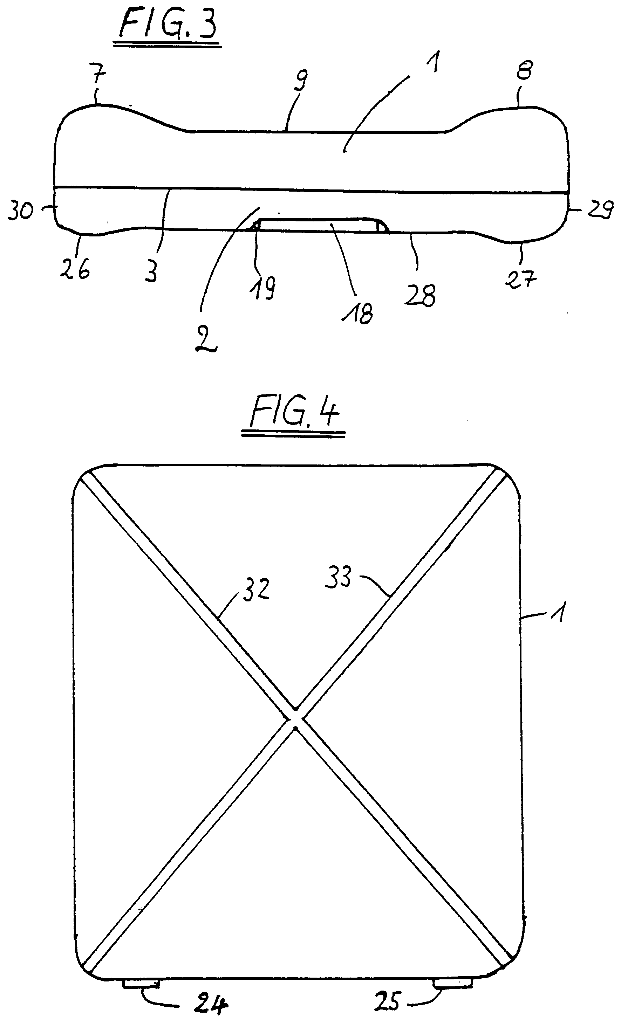

- Fig. 3: eine Stirnansicht auf den Ranzen in Richtung des Pfeiles III der Figur 1 und
- Fig. 4: eine Ansicht von oben auf die Sitzschale in Richtung des Pfeiles IV der Figur 1.

Der in der Zeichnung dargestellte Ranzen weist eine Sitzschale 1 und eine Ranzenschale 2 auf, die im geschlossenen Zustand eine umlaufende Fuge 3 bilden.

Die Sitzschale 1 ist entsprechend dem Gesäß des Kindes gemuldet, indem zwischen einer vorderen Erhöhung 4 und einer rückwärtigen Erhöhung 5 eine mittlere Mulde 6 vorgesehen ist. Desgleichen ist zwischen einer linken Erhöhung 7 und einer rechten Erhöhung 8 eine mittlere Mulde 9 vorgesehen.

Die Ranzenschale 2 ist an der dem Rücken des Kindes zugewandten Fläche konkav geformt. Am unteren Ende der Ranzenschale 2 sind Befestigungsmulden 10,11 sowie am oberen Ende der Ranzenschale 2 Befestigungsmulden 12,13 vorgesehen, in denen über Schnallen 14,15 längenverstellbare Tragegurte 16,17 befestigt sind.

Alternativ zu den Tragegurten 16,17 ist am oberen Ende der Ranzenschale ein Tragegriff 18 vorgesehen, der in eine Mulde 19 zurückschwenkbar ist.

An den unteren Flächen 20,21 der Sitzschale 1 und der Ranzenschale 2 sind Standfüße 22,23,24,25 vorgesehen.

Die Ranzenschale 2 hat an beiden Seiten eine Erhöhung 26,27, zwischen denen eine Vertiefung 28 vorgesehen ist, in der die Traggurte 16,17 bei Benutzung des Ranzens als Sitzkissen aufgenommen werden. Beim Tragen des Ranzens auf dem Rücken des Kindes paßt sich der Ranzen dem Rücken des Kindes an. Gleichzeitig wird ein eventuelles seitliches Verrutschen des Ranzens auf der Autositzbank verhindert.

An den Seitenflächen 29,30 der Ranzenschale 2 sind Reflektorstreifen 31 und auf der Sitzschale 1 Reflektorstreifen 32,33 angeordnet.

Der Ranzen hat zweckmäßig eine Sitzfläche von 40 x 35 cm. Alle Ecken und Kanten des Ranzens sind abgerundet und entgratet, damit die Autositze durch den Ranzen nicht beschädigt werden.

Der Ranzen ist zweckmäßig mit einem hautfreundlichen und weichen Kunststoff, insbesondere mit Polyurethan beschichtet, um Sitzkomfort auf langen Strecken zu gewährleisten. Außerdem ist die Ranzenschale rutschfest ausgebildet.

Das Gewicht des Ranzens ist möglichst gering gehalten, um unnötige Belastung der Kinder zu vermeiden. Zur Kontrolle des Ranzengewichtes kann der eingebaute Tragegriff 18 gleichzeitig als Federwaage ausgebildet sein, damit jederzeit das Gewicht des Ranzens feststellbar ist.

Der für die Sitzschale 1 und die Ranzenschale 2 verwendete Kunststoff soll leicht einfärbbar sein. Die Dicke des Ranzens beträgt etwa 10 bis 15 cm. Die Tragfähigkeit des Ranzens soll bei seiner Benutzung als Sitzkissen 40 kg nicht unterschreiten.

Die Standflächen 20,21 sind mittels einer Drehachse 34 schwenkbar miteinander verbunden.

### Bezugszeichenliste

- 1: Sitzschale
- 2: Ranzenschale
- 3: Fuge
- 4: Erhöhung
- 5: Erhöhung
- 6: mittlere Mulde
- 7: linke Erhöhung
- 8: rechte Erhöhung
- 9: Mulde
- 10: Befestigungsmulde
- 11: Befestigungsmulde
- 12: Befestigungsmulde
- 13: Befestigungsmulde
- 14: Schnalle
- 15: Schnalle
- 16: Tragegurt
- 17: Tragegurt
- 18: Tragegriff
- 19: Mulde
- 20: Fläche
- 21: Fläche
- 22: Standfuß
- 23: Standfuß
- 24: Standfuß
- 25: Standfuß
- 26: Erhöhung
- 27: Erhöhung
- 28: Vertiefung
- 29: Seitenfläche
- 30: Seitenfläche
- 31: Reflektorstreifen
- 32: Reflektorstreifen
- 33: Reflektorstreifen
- 34: Drehachse

## Patentansprüche

1. Ranzen für Schulkinder mit zwei Gurten an der dem Rücken zugewandten Fläche des Ranzens und mit einem Tragegriff am oberen Ende des Ranzens, **dadurch gekennzeichnet**, daß der Ranzen eine Ranzenschale (2) und eine Sitzschale (1) aufweist, die aus druck- und bruchstabilem sowie leichtem Kunststoff bestehen und mit hautfreundlichem und weichem Kunststoff beschichtet sind sowie an ihren Standfläche (20,21) schwenkbeweglich miteinander verbunden sind, daß die Ranzenschale (2) dem Rücken des Schulkindes entsprechend gewölbt sowie die Sitzschale (1) dem Gesäß des Schulkindes entsprechend gemuldet ist und daß die beiden Seitenwände (29,30) der Ranzenschale (2) hoch gezogen sind, so daß sie bei geschlossenem Ranzen die entsprechenden Seitenwände der Sitzschale überlappen.

2. Ranzen nach Anspruch 1, dadurch gekennzeichnet, daß die Standflächen (20,21) der Sitzschale (1) und die Ranzenschale (2) mittels einer gemeinsamen Drehachse (34) schwenkbeweglich miteinander verbunden sind.

3. Ranzen nach Anspruch 1 oder 2, dadurch gekennzeichnet, daß an der dem Rücken zugewandten Fläche der Ranzenschale (2) zwei Tragegurte (16,17) vorgesehen sind, die jeweils an beiden Enden in Befestigungsmulden (10,11,12,13) an der Ranzenschale (2) befestigt sind und daß am oberen Ende der Ranzenschale (2) ein Tragegriff (18) angebracht ist, der in einer Mulde (19) an der Ranzenschale (2) befestigt ist.

4. Ranzen nach einem der vorhergehenden Ansprüche, dadurch gekennzeichnet, daß an den freien Flächen des Ranzens Reflektorstreifen (31,32,33) vorgesehen sind.

## Claims

1. A satchel for school children having two straps at the surface of the satchel which is towards the back and a carrying handle at the upper end of the satchel, characterized in that the satchel has a satchel shell portion (2) and a seat shell portion (1) which comprise light plastics material that is stable in respect of pressure and breakage and which are coated with soft plastics material that is kind to the skin and which are pivotably movably connected together at their support surface (20, 21) on which they stand, that the satchel shell portion (2) is curved to correspond to the back of the school child and the seat shell portion (1) is hollowed to correspond to the bottom of the school child, and that the two side wails (29, 30) of the satchel shell portion (2) are extended upwardly so that when the satchel is closed they overlap the corresponding side walls of the seat shell portion.

2. A satchel according to claim 1 characterized in that the support surfaces (20, 21) of the seat shell portion (1) and the satchel shell portion (2) are pivotably movably connected together by means of a common axis of rotation (34).

3. A satchel according to claim 1 or claim 2 characterized in that provided at the surface of the satchel shell portion (2), which is towards the back, are two carrying straps (16, 17) which at each of their two ends are fixed to the satchel shell portion (2) in fixing hollows (10, 11, 12, 13) and that mounted at the upper end of the satchel shell portion (2) is a carrying handle (18) which is fixed to the satchel shell portion (2) in a hollow (19).

4. A satchel according to one of the preceding claims characterized in that reflector strips (31, 32, 33) are provided on the free surfaces of the satchel.

## Revendications

1. Cartable pour écoliers, comprenant deux bretelles sur la surface du cartable tournée vers le dos et une poignée sur l'extrémité supérieure du cartable, **caractérisé en ce** que le cartable comporte une coque de cartable (2) et une coque de siège (1) constituées d'une matière plastique légère résistant à la pression et à la rupture et revêtues d'une matière plastique souple et non-irritante pour la peau, qui sont articulées l'une avec l'autre sur leur surface de base (20, 21), que la coque de cartable (2) épouse la forme du dos de l'écolier, que la coque de siège (1) présente la forme des fesses de l'écolier, et que les deux parois latérales (29, 30) de la coque de cartable (2) sont relevées de manière que, à l'état fermé du cartable, elles recouvrent les parois latérales correspondantes de la coque de siège.

2. Cartable selon la revendication 1, caractérisé en ce que les surfaces de base (20, 21) de la coque de siège (1) et de la coque de cartable (2) sont articulées l'une avec l'autre au moyen d'un axe de rotation (34) commun.

3. Cartable selon les revendications 1 ou 2, caractérisé en ce qu'il comporte sur la surface de la coque de cartable (2) tournée vers le dos, deux bretelles (16, 17) dont les deux extrémités sont respectivement fixées dans des creux de fixation (10, 11, 12, 13) prévus sur la coque de cartable (2), et qu'à l'extrémité supérieure de la coque de cartable (2) est montée une poignée (18) dans un creux (19) dans la coque de cartable (2).

4. Cartable selon l'une des revendications précédentes, caractérisé en ce que des bandes réfléchissantes (31, 32, 33) sont prévues sur les surfaces libres du cartable.
